# EUROPEAN PATENT APPLICATION

(11) **EP 2 284 980 A2**
(43) Date of publication of application: **16.02.2011**
(21) Application number: 10152195.3
(22) Date of filing: 29.01.2010
(51) Int. Cl.: H02K 11/00, H02K 21/24, H02K 16/02

(54) **Generator with axial gap and permanent magnets**

(30) Priority: 06.08.2009 TW 98214541 U
(71) Applicant: Gene Power Holding Co. Ltd., Heng Gang Town, Long Gang District Shen Zhen City 518 (CN)
(72) Inventor: Song, Ta-Chun, Shen Zhen City 518 (CN); Guo, Dong-Liang, Shen Zhen City 518 (CN); Yang, Kuang-Yu, Shen Zhen City 518 (CN)
(74) Representative: Lang, Christian

(57) **Abstract**

A generator includes a shell (2), magnets (3), coils (12), an axle (11) and a power connection or battery (4). The shell (2) includes two shields (24) against magnetism and the magnets (3) are provided on an internal side of at least one of the shields (24). The stator (1) is disposed in the shell (2) and comprising the coils (12) being wrapped in polymer and able to interfer with the magnetic field of the magnets (3). The axle (11) is inserted through the stator (1) and the shell (2) so that the shell (2) is able to rotate around the axle (11). The power connection or battery (4) is connected to the coils (12).

## Description

### BACKGROUND OF INVENTION

### 1. FIELD OF INVENTION

The present invention relates to a generator and, more particularly, to a simple generator with a large inertia for generating a strong current without iron loss and mechanical loss.

### 2. RELATED PRIOR ART

A conventional generator includes a stationary shell, a first shaft rotationally disposed in the stationary shell with two bearings, a rotational shell disposed in the stationary shell, a first gear secured to the first shaft, a second gear rotationally disposed in the stationary shell, a second shaft rotationally disposed in the rotational shell, a rotor provided on the second shaft, a coil ring disposed in the rotational shell, an output unit disposed in the stationary shell

The present invention is therefore intended to obviate or at least alleviate the problems encountered in prior art.

### SUMMARY OF INVENTION

It is the primary objective of the present invention to provide a simple generator with a large inertia for generating a strong current without iron loss and mechanical loss.

To achieve the foregoing objective, the generator includes a shell, magnets, coils, an axle and a load unit. The shell includes two shields against magnetism. The magnets are provided on an internal side of at least one of the shields. The stator is disposed in the shell. The coils are wrapped in polymer and attached to the stator corresponding to the magnets. The axle is inserted through the stator and the shell so that the shell is rotational on the axle. The load unit is connected to the coils.

Other objectives, advantages and features of the present invention will become apparent from the following description referring to the attached drawings.

### BRIEF DESCRIPTION OF DRAWINGS

The present invention will be described via detailed illustration of the preferred embodiment referring to the drawings.
Fig. 1 is a front view of a generator according to the preferred embodiment of the present invention.
Fig. 2 is a cross-sectional view of the generator shown in Fig. 1.
Fig. 3 is a simplified front view of the generator shown in Fig. 1.

### DETAILED DESCRIPTION OF PREFERRED EMBODIMENT

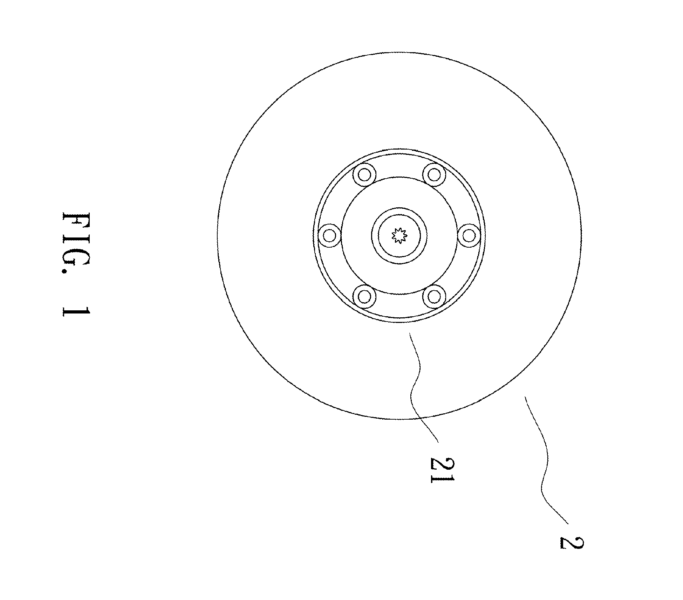

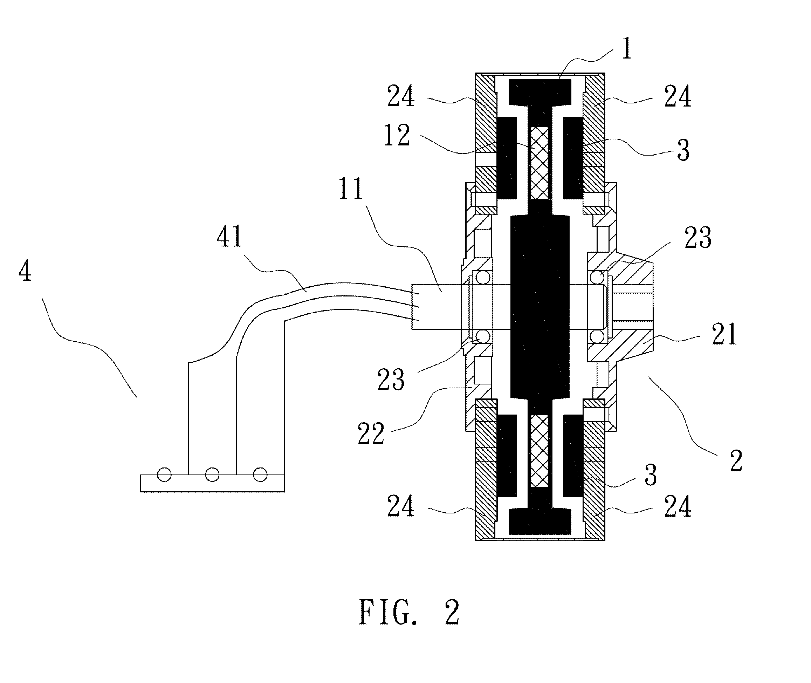

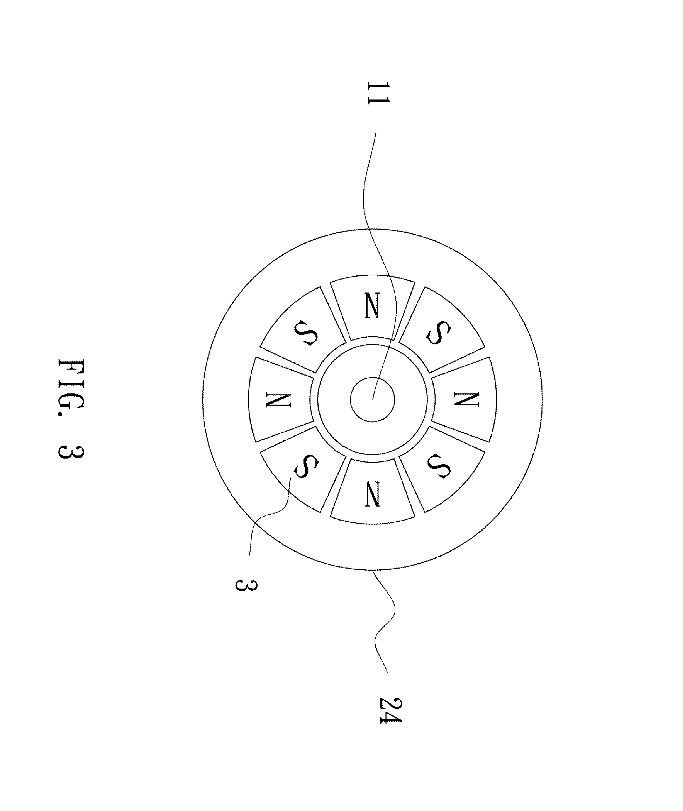

Referring to Figs. 1 to 3, a generator includes a stator 1, a shell 2, magnets 3 and a load unit 4 according to the preferred embodiment of the present invention. The shell 2 includes two covers 21 and 22 and two shields 24 against magnetism. Each of the shields 24 includes a central opening for receiving a related one of the covers 21 and 22 when the shields 24 are located between the covers 21 and 22.

The stator 1 is disposed in the shell 2. An axle 11 is inserted through the stator 1 and the shell 2. The axle 11 is provided on the covers 21 and 22 with two bearings 23 so that the shell 2 is rotational on the axle 11. Coils 12 are wrapped with polymer and disposed in the stator 1.

Some of the magnets 3 are provided on an internal side of one of the shields 24 while the other magnets 3 are provided on an internal side of the other shield 24. The magnets 3 are aligned with the coils 12. The magnets 3 are preferably made of magnetic steel.

The load unit 4 is connected to the coils 12 with wires 41. The wires 41 can be located outside or embedded in the stator 1.

In operation, an external torque is exerted on the shell 2, thus rotating the magnets 3. The coils 12 intersect lines of magnetic forces provided by the magnets 3, thus generating an electromotive force ("EMF"). The EMF causes a current flowing to the load unit 4 through the wires 41. A closed loop of the load unit 4 converts the current into desired electricity for later use.

Because the magnets 3 are secured to the shell 2, the magnets 3 and the shell 2 are rotated together to provide a large inertia when the shell 2 is subjected to the external torque. The intersection of the lines of magnetic forces is frequent, thus rendering the current strong without iron loss and mechanical loss.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. A generator comprising:
a shell (2) comprising two shields (24) against magnetism;
magnets (3) provided on an internal side of at least one of the shields (24);
a stator (1) disposed in the shell (2);
coils (12) wrapped in polymer and attached to the stator (1) corresponding to the magnets (3);
an axle (11) inserted through the stator (1) and the shell (2) so that the shell (2) is rotational on the axle (11); and
a load unit (4) connected to the coils (12).

2. The generator according to claim 1 comprising bearings (23) for supporting the shell (2) on the axle (11).

3. The generator according to claim 1, wherein the magnets (3) are made of magnetic steel.

4. The generator according to claim 1 comprising wires (41) for connecting the load unit (4) to the coils (12).
